# EUROPÄISCHE PATENTSCHRIFT

(11) **EP 1 810 769 B1**
(45) Veröffentlichungstag und Bekanntmachung des Hinweises auf die Patenterteilung: **18.11.2009**
(21) Anmeldenummer: 07000655.6
(22) Anmeldetag: 13.01.2007
(51) Int. Cl.: B23D 45/10, B27B 5/065, B27C 9/04

(54) **Plattenbearbeitungsvorrichtung mit einer Sägeeinheit und Verfahren zum Betreiben einer solchen Vorrichtung**
Panel working machine with a saw unit and method for operating such a machine
Machine à usiner des panneaux avec unité de sciage et procédé de fonctionnement d'une telle machine

(30) Priorität: 19.01.2006 DE 102006002504
(43) Veröffentlichungstag der Anmeldung: 25.07.2007
(73) Patentinhaber: Firma HOLZMA Plattenaufteiltechnik GmbH, 75365 Calw-Holzbronn (DE)
(72) Erfinder: Esslinger, Ernst, 72275 Alpirsbach (DE); Gröning, Peter, 75392 Deckenpfronn (DE); Blaich, Markus, 75365 Calw-Stammheim (DE)
(74) Vertreter: Kohler Schmid Möbus

(56) Entgegenhaltungen:
- DE-A1- 3 823 635
- DE-A1- 19 859 792
- DE-C1- 3 609 331
- FR-A- 1 386 147

## Beschreibung

Die Erfindung betrifft ein Verfahren zum Betreiben einer
Plattenbearbeitungsvorrichtung und eine Plattenbearbeitungsvorrichtung mit einer Sägeeinheit.

Derartige Vorrichtungen sind zum Beispiel aus der DE 103 12 865 A1 und der WO 03/078097 A1 bekannt. Diese bekannten Vorrichtungen zum Aufteilen von Platten haben wie auch der Anmeldungsgegenstand eine Sägeeinheit mit zwei kreisförmigen Sägeblättern, die in derselben Ebene angeordnet sind und von denen das in Vorschubrichtung vordere Sägeblatt (Vorsägeblatt) die zu zerteilende Platte, die beispielsweise aus einer furnierten Pressspanplatte bestehen mag, nur wenig aber mit hoher Schnittgüte einschneidet, und das zweite Sägeblatt das Werkstück durchtrennt. Der Vorschub der Sägeeinheit erfolgt bei stillstehender Platte in einer Querrichtung (Y-Richtung), die rechtwinklig zu der Vorschubrichtung (X-Richtung) der Platte verläuft, mit der die Platte dann, wenn die Sägeeinheit seitlich außerhalb der Platte sich befindet, von einer Vorschubvorrichtung vorgeschoben werden kann. Nach dem Vorschub oder zuvor ist die Sägeeinheit zurückgelaufen, um in der zuvor geschilderten Bewegungsrichtung den nächsten Schnitt auszuführen. Die Vorrichtung kann nur zum Ausführen geradliniger Schnitte verwendet werden, aber beispielsweise nicht für kurvenförmig verlaufende Schnitte. Die bekannte Vorrichtung kann allerdings durchaus dazu verwendet werden, die Platte zunächst durch parallele Schnitte aufzuteilen, und anschließend die auf diese Weise erhaltenen Teile um 90° gedreht der Vorrichtung wieder zuzuführen und weitere Schnitte auszuführen, die zu den zuvor geführten Schnitten um 90° versetzt sind, so dass kleinere rechteckförmige Stücke entstehen.

In den Druckschriften DE 36 09 331 C1 und DE 198 59 792 A1 ist jeweils eine Plattenbearbeitungsvorrichtung mit einem Tisch zur Lagerung einer zu bearbeitenden Platte, einer Vorschubeinrichtung zum Verschieben der Platte in einer ersten Richtung (X-Richtung), und einer Bearbeitungseinheit, die zwei antreibbare Sägeblätter aufweist beschrieben. Dabei ist die Bearbeitungseinheit zum Ausführen eines Sägevorgangs von einer Bearbeitungsseite der Platte her in einer zweiten Richtung (Y-Richtung), die zur X-Richtung rechtwinklig verläuft, antreibbar gelagert, und die Bearbeitungseinheit weist ein weiteres Werkzeug auf, das fähig ist, die Platte zusätzlich zu bearbeiten.

Der Erfindung liegt die Aufgabe zugrunde, unter Beibehaltung der eben beschriebenen Verwendungsmöglichkeiten eine Vorrichtung bereit zu stellen und die Vorrichtung so zu betreiben, dass sie auch zum Trennen längs einer gekrümmten Linie geeignet ist und Plattenschnitte in x- und y-Richtung ohne Drehung von Plattenteilen ermöglicht.

Diese Aufgabe wird durch die in den Ansprüchen 1 und 12 angegebenen Merkmale gelöst. Von Vorteil ist, dass ein kurvenförmiger Schnitt durch gleichzeitigen Vorschub der Platte in zwei rechtwinklig zueinander verlaufenden Richtungen ausgeführt werden kann. Die erfindungsgemäß betriebene Vorrichtung gestattet es jedoch auch, ohne einen Vorschub in Querrichtung (Y-Richtung) während des Vorschubs der Platte in X-Richtung diese in X-Richtung zu trennen. Ebenfalls gestattet es die Vorrichtung, bei stillstehender Platte in Querrichtung (Y-Richtung) verlaufende Bearbeitungsvorgänge ohne Verwendung der Sägeeinheit vorzunehmen. Beliebige Bearbeitungsvorgänge können also ohne weitere Bearbeitungseinheit durchgeführt werden.

Die Unteransprüche definieren vorteilhafte Weiterbildungen der Erfindung.

Vorteilhafterweise wird die Plattenbearbeitungsvorrichtung so eingesetzt, dass zuerst je nach Bedarf in verschiedenen Positionen in y-Richtung das weitere Werkzeug (Fräser, Laser, usw.) so ortsfest positioniert wird, dass mit dem weiteren Werkzeug Schnitte in x-Richtung der Platte ausgeführt werden können. Sind alle Schnitte in x-Richtung ausgeführt, so wird über die Sägeblätter ein Schnitt in y-Richtung über Teile oder die gesamte Plattenbereite durchgeführt. Dabei wird über
die Sägeblätter auch jedwede Rundung abgeschnitten, die am Ende eines Schnitts in x-Richtung auftreten können. Mit einer derartigen Bearbeitung ist eine vollautomatische Plattenbearbeitung möglich.

Weitere Merkmale und Vorteile der Erfindung ergeben sich aus der folgenden Beschreibung eines Ausführungsbeispiels der Erfindung mit einigen Modifikationen im Zusammenhang mit der Zeichnung und aus den Ansprüchen.

Die Zeichnung ist sehr stark vereinfacht und schematisiert und zeigt nur die zum Verständnis der Erfindung unbedingt erforderlichen Merkmale.

Es zeigt:
- Fig. 1: eine schematische Seitenansicht der wichtigsten Teile eines Ausführungsbeispiels einer erfindungsgemäß zu betreibenden Vorrichtung;
- Fig. 2: eine schematische Draufsicht in Richtung des Pfeils II in Fig. 1;
- Fig. 3: eine Seitenansicht in Richtung des Pfeils III in Fig. 2 auf die Bearbeitungseinheit mit mehr Einzelheiten als in den Figuren 1 und 2 sichtbar;
- Fig. 4: ein erstes einfaches Beispiel eines Schnittbilds einer Platte, die in vier Teile zerteilt werden soll, und
- Fig. 5: ein zweites Ausführungsbeispiel eines Schnittbilds einer Platte, die durch eine gekrümmt verlaufende Trennlinie in zwei Teile zerteilt werden soll.

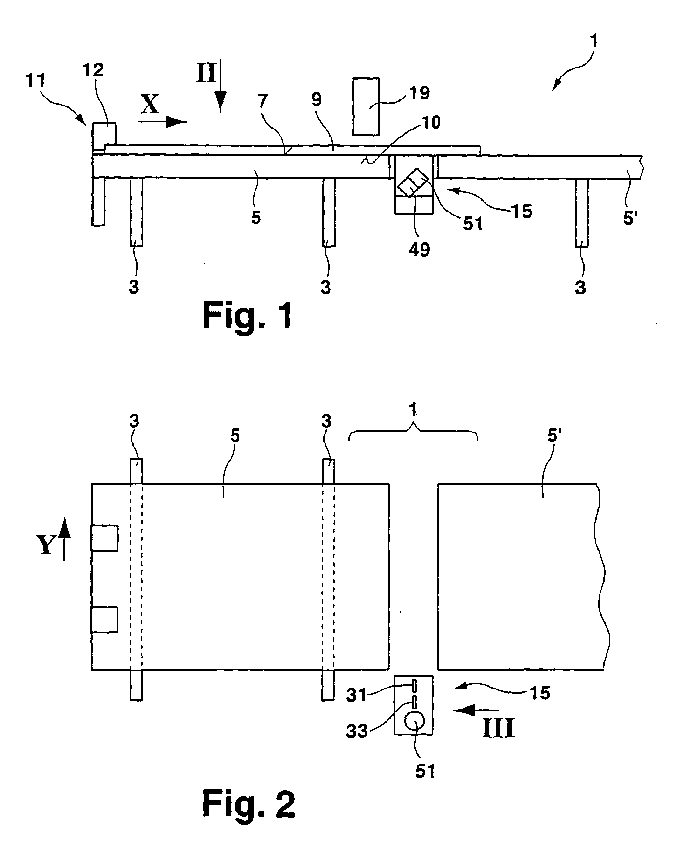

In Fig. 1 weist eine Plattenbearbeitungsvorrichtung 1 ein Gestell 3 auf, das einen durch einen hinteren Tisch 5 und einen vorderen Tisch 5' gebildeten Tisch trägt, dessen Oberseite eine Tischebene 7 definiert. Wird der vordere Tisch 5' als hinterer Tisch und der hintere Tisch 5 als vorderer Tisch 5' eingesetzt, so ergeben sich im Bearbeitungsablauf der Platte 9 keine wesentlichen Änderungen. Im Betrieb wird eine Platte 9 auf dem hinteren Tisch 5 bereit gestellt. Während der Bearbeitung ist die Platte 9 im allgemeinen teilweise auf dem vorderenTisch 5' abgestützt. Die Bearbeitung erfolgt im Beispiel von einer einzigen Bearbeitungsseite her, nämlich im Beispiel von der Unterseite 10 der Platte 9. Die Bearbeitung könnte aber auch ausschließlich von der Oberseite aus erfolgen. Die Platte 9 ist im Allgemeinen rechteckförmig und hat eine gleichmäßige Dicke und besteht zum Beispiel aus einem für die Möbelindustrie geeigneten Material, wie beispielsweise einer Holzspanplatte, die furniert sein kann, einer Holzplatte, einer Kunststoffplatte. Die Erfindung schließt nicht aus, dass statt der Bearbeitung von der Unterseite 10 der Platte 9 auch eine Bearbeitung der Platte 9 von der Oberseite her erfolgt; diese wird jedoch nicht eigens beschrieben, da sie sich bei entsprechend konstruktiven Ausführungen aus der nachfolgenden Beschreibung ergibt. Der Tisch 5, 5' stützt die Platte 9 und ist daher zum Halten in einer üblicherweise waagrechten Position der Platte 9 und für deren leichten Vorschub ausgebildet. Daher weist mindestens der hintere Tisch 5 in seiner Tischebene 7 Stützrollen und bei Bedarf auch Förderbänder zum möglichst reibungsarmen Vorschub der Platte 9 auf. In einem Bereich zwischen dem hinteren Tisch 5 und dem vorderen Tisch 5' wird die Platte 9 bearbeitet.

An der Vorderseite der Vorrichtung 1 (links in Fig. 1) ist eine Spannvorrichtung 11 vorgesehen, die Spannbacken 12 aufweist, die nach unten antreibbar sind, um dadurch die Platte 9 an ihrem hinteren Randbereich festzuhalten. Die Spannvorrichtung 11 ist maschinell getrieben linear nach rechts bewegbar, dies ist die Vorschubrichtung der Platten 9 und in dieser Anwendung die X-Richtung. Zwischen dem hinteren Tisch 5 und dem vorderen Tisch 5' der Vorrichtung 1 ist unterhalb der Tischebene 7 eine Bearbeitungseinheit 15 angeordnet, die waagrecht in einem Winkel von 90° zur X-Richtung in nicht gezeigter Weise am Gestell 3 beweglich verschiebbar geführt und antreibbar ist; es ist dies die Y-Richtung.

Wie in Fig. 2 als Draufsicht gezeigt ist, kann die Bearbeitungseinheit 15 seitlich so weit verfahren werden, dass sie nicht mit der Platte 9, wenn diese vorwärts geschoben wird, in Berührung kommen kann (d.h., außer Eingriff ist, von der Platte 9 nicht abgedeckt ist). Dies ist nützlich, wenn die Platte 9 durch eine Anzahl von aufeinander folgenden Sägeschnitten zerteilt werden soll, die keine Änderung der Tiefeneinstellung der Sägeblätter erfordern. Dann können die Sägeblätter in ihrer oberen Arbeitsstellung bleiben. In dieser Stellung würden sie, solange sie sich unterhalb der Platte 9 befinden, deren Vorschub in X-Richtung verhindern. Die abgeschnittenen Teile bleiben auf dem vorderen Tisch 5' liegen, dessen Oberseite mit der des hinteren Tisches 5 fluchtet. Damit die noch genauer zu beschreibenden Werkzeuge der Bearbeitungseinheit 15 sauber und zuverlässig arbeiten können, wird im Betrieb die Platte 9, durch einen im Gestell 3 in nicht gezeigter Weise gelagerten Druckbalken 19 (siehe Fig. 1), gegen die Tischebene 7 des Tischs 5 gedrückt, wobei zumindest zu den Zeiten, in denen nicht gesägt wird, der Druckbalken 19 über Druckrollen auf die Platte 9 drückt, die zumindest in diesem beschriebenen Fall von unten durch Gegendruckrollen abgestützt ist, so dass die Platte 9 mit relativ geringer Reibung in X-Richtung vorwärts geschoben werden kann, wenn dies für die noch zu beschreibenden Arbeitsvorgänge erforderlich ist. Bei vorteilhaften Ausführungsformen der Erfindung befindet sich der Druckbalken unmittelbar über der Bearbeitungsstelle und ist unten in seiner Längsrichtung geschlitzt, so dass die Sägeblätter und das weitere Werkzeug ohne Schaden in ihn eindringen können. Diese Ausführungsform ist zur Zeichnungsvereinfachung nicht dargestellt.

Um jedoch die Plattenbearbeitungsvorrichtung 1 erfindungsgemäß zu nutzen, muss nur optional ein Druckbalken 19, wie in Fig. 1 gezeigt, vorgesehen sein, weil in der Regel Fräser, die als weiteres Werkzeug 51 eingesetzt werden können ein ziehendes Durch- und Einschnittsverhalten aufweisen, dass heißt, die zu schneidende, fräsende Platte 9 wird beim Fräsvorgang vom Fräser angezogen. Diese Kraft reicht in der Regel aus, um die zu schneidende Platte 9 beim Schneidvorgang positionsstabil zu führen.

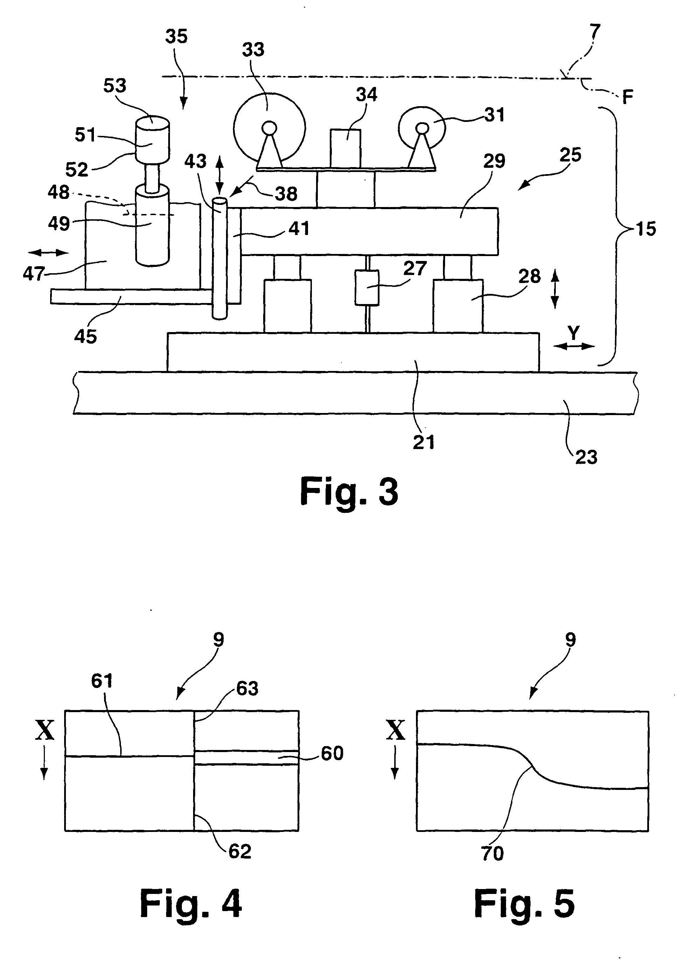

Wie die Fig. 3 zeigt, ist die Bearbeitungseinheit 15 mit einer an ihrem unteren Bereich angeordneten Basisplatte 21 an Querträgern 23 (nur einer gezeigt) des Gestells 3 rechtwinklig zur Zeichenebene der Fig. 1 verschiebbar geführt und in nicht gezeigter Weise maschinell antreibbar. Auf der Basisplatte 21 ist eine Sägeeinheit 25 höhenverstellbar (also in Z-Richtung verstellbar) befestigt. Die Sägeblätter 31, 33 können auch getrennt und unabhängig voneinander höhenverstellt werden, so dass sie individuell zur Unterseite der Platte positioniert werden können. Hierzu dienen ein Stellmotor 27 und vertikale Führungen 28. Die Verstellung kann auch über Pneumatikzylinder, einen Linearmotor oder über einen Spindelantrieb erfolgen. Eine oberhalb der zuletzt genannten Teile angeordnete Montageplatte 29 trägt ein kreisförmiges Vorsägeblatt 31 und ein Hauptsägeblatt 33 mit größerem Durchmesser. Beim Sägen unter Verwendung der Sägeeinheit 25 und der Vorritz-Möglichkeit wird die Sägeeinheit 25 seitlich außerhalb der zu sägenden Platte 9 so weit nach oben verstellt, dass das in der Fig. 3 weiter rechts liegende Vorsägeblatt 31 etwas weiter nach oben reicht als die Tischebene 7, die auf der gleichen Höhe wie die Unterseite der zu bearbeitenden Platte 9 liegt. Wird nun die gesamte Bearbeitungseinheit 15 samt der Sägeeinheit 25 in der Ansicht der Fig. 3 von außerhalb des Randbereichs der Platte 9, den man sich in Fig. 3 rechts von der Bearbeitungseinheit 15 vorstellen muss, in Richtung zu der Platte 9 bewegt, so kommt zunächst das Vorsägeblatt 31 mit geringer Schneidtiefe mit der Platte 9 in Eingriff, und beim weiteren Vorschub der Bearbeitungseinheit 15 nach rechts in der Ansicht der Fig. 3 kommt anschließend das Hauptsägeblatt 33 mit einer größeren Schneidtiefe, die zum Durchtrennen der Platte 9 ausreicht, in Eingriff. Wenn erforderlich, kann die Anordnung so eingestellt werden, dass die Höhendifferenz der Drehachsen der beiden Sägeblätter 31, 33 den gewünschten Schneidbedingungen angepasst ist. Zum Antrieb der Sägeblätter 31, 33 dient mindestens ein Elektromotor 34.

Auf der Bearbeitungseinheit 15, die schwenkbar mit und ohne Linearschnitten ausgebildet sein kann, ist zusätzlich zur Sägeeinheit 25 eine weitere Einheit 35 angeordnet und relativ zur Montageplatte 29 höhenverstellbar und in waagrechter Richtung, also bezüglich des Abstands, verstellbar. Die Sägeblätter 31, 33 lassen sich bei Bedarf auch schräg stellen, so dass Gehrungsschnitte durchgeführt werden können. Die Einheit 35 ist, allgemein gesprochen, eine solche, die keine starr vorgegebene Bearbeitungsrichtung in der X-Y-Ebene hat, wie dies bei den beiden fluchtend hintereinander angeordneten Sägen 31 und 33 der Fall ist. Für die Einheit 35 kommen beispielsweise folgende Werkzeugarten in Frage: Fräser, die vorzugsweise gleichzeitig als Walzenfräser und Kopffräser ausgebildet sein können und somit in beliebiger Richtung von der Unterseite der Platte her diese bearbeiten können. Weiterhin kann bei Bedarf eine Stichsäge oder ein Sägedraht eingesetzt werden. Die Einheit 35 kann auch eine Wasserstrahlschneidvorrichtung enthalten oder auch einen Schneidvorgang mit Hilfe von Laserstrahlen ausführen. Die beiden zuletzt genannten Vorrichtungen können ohne Schwierigkeiten so konstruiert werden, bzw. sind so aufgebaut, dass sie während des Bearbeitungsvorgangs der Platte 9 nicht in eine durch diese weiteren Werkzeuge erzeugte Vertiefung der Platte 9 eindringen, wie dies bei den Sägeblättern 31, 33 und zum Beispiel bei dem Fräser oder den anderen rein mechanisch wirkenden Werkzeugen der Fall ist. Das Wasserstrahlschneidwerkzeug und die Lasereinheit behindern daher den Vorschub der Platte nicht, da sie zum Bearbeiten nicht in Richtung zur Platte bewegt werden müssen. Die anderen weiteren Werkzeuge müssen aber von der Platte 9 weg bewegt werden, wenn z. B. die Plattenbearbeitungsvorrichtung mit dem bereits beschriebenen Sägevorgang betrieben wird, ohne dass gleichzeitig die weitere Einheit 35 eine gleich laufende Bearbeitung ausführt, (z. B. die Schnittkanten des von der Sägeeinheit gerade erzeugten Schnittes bearbeitet). Die weiteren Werkzeuge werden daher durch die im Folgenden beschriebene Vertikalverstellvorrichtung 38 relativ zur Montageplatte 29 abgesenkt.

Die Vertikalverstellvorrichtung 38 weist eine an der Montageplatte 29 angeordnete vertikal verlaufende Führungsschiene 41 und eine in diese eingreifende und gegenüber der genannten Führungsschiene 41 verschiebbare Gegenschiene 43 auf, die in nicht gezeigter Weise maschinell relativ zueinander verschiebbar sind. Die Gegenschiene 43 trägt eine Halteplatte 45, auf der eine Halterung 47 befestigt ist und relativ zur Halteplatte 45 maschinell (nicht gezeigt) in waagrechter Richtung in Fig. 3 und somit in der Y-Richtung verschiebbar und einstellbar ist. Dadurch kann der Abstand der Halterung 47 von der Sägeeinheit 25 verändert werden. Die Hubbewegung der Sägeeinheit 25 ist auch schwenkbar möglich.

Die Halterung 47 trägt um eine Achse 48 schwenkbar einen Elektromotor 49 zum Antrieb eines Werkzeugs 51, das in der oben beschriebenen Weise bezüglich seiner Bewegung über die Platte 9 nicht auf bestimmte Richtungen eingeschränkt ist. Im Beispiel handelt es sich bei dem Werkzeug 51 um einen zylindrischen Fräskopf mit einem Mantel 52 und einer Stirnfläche 53, die zum Fräsen ausgebildet sind. Die Schwenkachse 48 ist so angeordnet, dass sie in der Darstellung der Fig. 3 parallel zur Zeichenebene und waagrecht verlaufend liegt, so dass das obere Ende des Werkzeugs 51 zum Betrachter hin (wie Fig. 1 und Fig. 3 zeigen) und von diesem weg geschwenkt werden kann. Die Schwenklagerung kann, was in manchen Fällen zweckmäßig ist, dadurch modifiziert werden, dass das untere Ende des Motors 49 in einer Kreisbogenführung derart geführt wird, dass die Längsachse des Werkzeugs 51 um einen bestimmten Punkt schwenkt. Dieser Punkt kann ein Punkt auf der bei einem zuvor erfolgten Sägevorgang erzeugten Sägekante sein. In bestimmten Fällen mag es ausreichen, die Schwenkeinstellung des Werkzeugs 51 von Hand vorzunehmen, wenn diese Schwenkstellung für längere Zeit beibehalten werden kann. Fig. 2 zeigt das weitere Werkzeug 51 in senkrechter Stellung. Das weitere Werkzeug hat bei Ausführungsformen der Erfindung eine weitere, rechtwinklig zur Achse 48 verlaufende Schwenkachse.

Dadurch, dass sich die weitere Einheit 35 auf der gleichen beweglichen Einheit befindet wie die Sägeeinheit 25, also auf dem bei bekannten Maschinen als Sägewagen bezeichneten Maschinenteil, ergibt sich ein sehr einfacher Aufbau. Es kann unter Umständen auch die Anzahl der Kraftantriebe für die beiden Sägen und für das Werkzeug 51 verringert werden, indem zwei oder sogar alle drei anzutreibenden Bearbeitungswerkzeuge (die zwei Sägen und das Werkzeug 51) vom selben Antriebsmotor über geeignete Antriebsmittel wie Zahnriemen oder dergleichen angetrieben werden.

Im Fall, dass es sich bei der weiteren Einheit 35 um eine Lasereinheit handelt, ist es durchaus möglich und in vielen Fällen zweckmäßig, den eigentlichen Laser ortsfest anzuordnen und den von ihm erzeugten Lichtstrahl auf die Einheit zu lenken, die dann Umlenkvorrichtungen für das Licht, insbesondere Spiegel aufweist, die den Laserstrahl, gegebenenfalls nach einer weiteren Bündelung oder auch Aufspreizung, auf das Werkstück, nämlich die Unterseite der Platte 9, richten.

In vielen Fällen wird die Verarbeitung so ablaufen, dass zur Ausführung von Sägeschnitten die Sägeeinheit 25 angehoben und die weitere Einheit 35 abgesenkt ist, und zur Ausführung von im Beispiel Fräsarbeiten ohne gleichzeitige Sägearbeiten die Sägeeinheit 25 abgesenkt ist und die weitere Einheit 35 angehoben ist.

Das in Fig. 4 gezeigte Schnittbild ist in folgender Weise zu verstehen: Die in Fig. 4 untere Kante der noch nicht zerteilten Platte 9 ist möglicherweise durch einen vorhergehenden Begradigungsschnitt mit der nötigen Genauigkeit hergestellt worden. Es ist zunächst durch die weitere Einheit 35 ein Schlitz 60 herzustellen, der sich nicht über die gesamte Breite der Platte 9 erstreckt und der erheblich breiter ist als die Breite eines einfachen Sägeschnitts. Der sich an den Schlitz 60 anschließende Sägeschnitt 61 trifft etwa in der Mitte der Breite des Schlitzes 60 auf diesen. Es wird daher nunmehr die Platte 9 zunächst in X-Richtung soweit vorgeschoben, bis die weitere Einheit 35 den Schlitz 60 durch eine Bewegung von rechts nach links in Fig. 4 herstellen kann, je nach Durchmesser des Fräsers in einem Durchlauf oder in mehreren Durchläufen. Bevorzugt ist jedoch die Breite der Frässpur nicht breiter als die maximale 2-fache Sägeblattbreite, um eine durch einen Fräser erzeugte Rundung am Ende eines Schnitts oder Einfräsung mit einem einzigen Schnitt eines Sägeblatts wegschneiden zu können (quer zur Rundung). Dabei ist die Sägeeinheit 25 abgesenkt. Nachdem der Fräser, Laser, usw. (Werkzeug 51) bis zum innerhalb der Platte liegenden Ende des Schlitzes 60 gelangt ist, wird die weitere Einheit 35 abgesenkt und die gesamte Bearbeitungseinheit 15 wird in der Ansicht der Figuren 3 und 4 nach links bis an oder über die linke Begrenzung der Platte 9 hinaus verfahren. Es wird nun die Sägeeinheit 25 angehoben und der Schlitz 61 von links nach rechts gesägt. Die Platte 9 ist nun in zwei Teile, die nicht rechteckig sind, unterteilt worden. Diese Teile können von Hand oder durch geeignete Vorrichtungen auf dem vorderen Tisch 5' in der Orientierung, die sie in Fig. 4 haben, um 90° gedreht werden, auf den hinteren Tisch 5 zurückgeführt werden, anschließend wieder vorwärts geschoben werden und schließlich durch die Sägeeinheit 25 mittels der linear hintereinander angeordneten Schnitte 62 und 63 in insgesamt vier Teile unterteilt werden. Beim Beispiel der Fig. 4 wurde während des Betriebs der weiteren Einheit 35 die Platte 9 nicht verschoben.

Soll dagegen gemäß Fig. 5 die Platte 9 mittels einer kurvenförmig oder allgemeiner nicht nur in X-Richtung und nicht nur in Y-Richtung verlaufenden Schnittlinie 70 in zwei Teile zerlegt werden, so wird bei der beschriebenen erfindungsgemäßen Vorrichtung die Sägeeinheit nicht benutzt. Es wird nur die weitere Bearbeitungsvorrichtung (Fräser, Laser, usw.) benutzt, und es wird zunächst die Platte 9 in X-Richtung so weit vorgeschoben, bis das weitere Werkzeug 51 an dem in Fig. 5 linken Ende der Schnittlinie 70 seine Arbeit beginnen kann. Hierzu wird das weitere Werkzeug 51 in Y-Richtung und gleichzeitig die Platte 9 in X-Richtung bewegt. Die vom weiteren Werkzeug relativ zur Plattenfläche beschriebene Kurve kann auch in sich geschlossen sein, so dass nach der Ausführung des Schnittes ein Teil (Werkstück) mit der gewünschten Kontur aus der im Übrigen rechteckigen Platte 9 ausgefräst worden ist. Es ist auch möglich, mehrere solcher Einzelteile aus der Platte 9 auszufräsen, wobei dann möglicherweise die Platte 9 ihre ursprünglich vorhandene äußere rechteckige Kontur beibehält. Wenn gewünscht und zweckmäßig, kann nach dem Aussägen einer gewissen Anzahl solcher Einzelteile der insoweit verbrauchte Teil der Platte 9 mittels eines geraden Sägeschnitts abgeschnitten werden.

Die erfindungsgemäß zu betreibende Vorrichtung hat insgesamt den Vorteil eines relativ einfachen Aufbaus. Sie gestattet eine schnelle Fertigung. Sie gestattet eine hohe Schnittgüte, auch z. B. bei der Verarbeitung von metallischen Körpern oder Acrylglas, und lässt sich mittels numerischer Steuerung betreiben. Außerdem ermöglicht sie das Aufteilen einer Platte ohne jeglichen Handeingriff. Mit dem weiteren Werkzeug lassen sich unter dem Einsatz von konisch geformten Fräsern oder verschwenkbaren zylinderisch ausgebildeten Fräsern Gehrungsschnitte herstellen.

Eine Plattenbearbeitungsvorrichtung 1 mit einem Tisch 5, 5' zur Lagerung einer zu bearbeitenden Platte 9, einer Vorschubeinrichtung zum Verschieben der Platte 9 in einer ersten Richtung (X-Richtung), und einer Bearbeitungseinheit 15, die zwei antreibbare Sägeblätter (Vorsägeblatt 31, Hauptsägeblatt 33) aufweist, wobei die Bearbeitungseinheit 15 zum Ausführen eines Sägevorgangs von einer Bearbeitungsseite (Unterseite) der Platte 9 her in einer zweiten Richtung (Y-Richtung), die zur X-Richtung rechtwinklig verläuft, antreibbar gelagert ist, ist dadurch gekennzeichnet, dass die Bearbeitungseinheit 15 ein weiteres Werkzeug 51 aufweist, das fähig ist, die Platte 9 in mehr als einer einzigen Richtung (im Gegensatz zu einem Kreissägeblatt) zu bearbeiten.

## Patentansprüche

1. Verfahren zum Betreiben einer Plattenbearbeitungsvorrichtung (1) mit einem Tisch (5, 5') zur Lagerung einer zu bearbeitenden Platte (9), einer Vorschubeinrichtung zum Verschieben der Platte (9) in einer ersten Richtung (X-Richtung), und einer Bearbeitungseinheit (15), die zwei antreibbare Sägeblätter (Vorsägeblatt 31, Hauptsägeblatt 33) aufweist, wobei die Bearbeitungseinheit (15) zum Ausführen eines Sägevorgangs von einer Bearbeitungsseite der Platte (9) her in einer zweiten Richtung (Y-Richtung), die zur X-Richtung rechtwinklig verläuft, antreibbar gelagert ist, wobei die Bearbeitungseinheit (15) ein weiteres Werkzeug (51) aufweist, das fähig ist, die Platte (9) zusätzlich zu bearbeiten,
**dadurch gekennzeichnet, dass** die Bearbeitungseinheit (15) in y-Richtung unter der Platte (9) positioniert wird, die Platte (9) in x-Richtung bei ortsfester Bearbeitungseinheit (15) oder bei gleichzeitiger Bewegung des weiteren Werkzeuges (51) in y-Richtung verfahren wird und dabei die Platte (9) an mindestens einer Stelle einen Durchschnitt oder Einschnitt in x-Richtung über das weitere Werkzeug (51) erfährt und dass in einem zweiten Bearbeitungsschritt über die Sägeblätter (31, 33) ein zweiter Durchschnitt der Platte (9) in y-Richtung erfolgt.

2. Verfahren nach Anspruch 1, **dadurch gekennzeichnet, dass** mindestens die Sägeblätter (31, 33) durch Entfernen aus der Ebene der Bearbeitungsseite in eine Stellung gebracht werden, in der bei Bewegung der Bearbeitungseinheit (15) in Y-Richtung eine Berührung der zu bearbeitenden Platte (9) durch die Sägeblätter ausgeschlossen ist.

3. Verfahren nach einem der vorhergehenden Ansprüche, **dadurch gekennzeichnet, dass** das weitere Werkzeug (51) aus der Ebene der Bearbeitungsseite zum Verhindern einer Berührung der Platte (9) entfernt wird.

4. Verfahren nach Anspruch 3, **dadurch gekennzeichnet, dass** das weitere Werkzeug (51) relativ zu anderen Teilen der Bearbeitungseinheit (15) verschiebbar gelagert ist.

5. Verfahren nach einem der vorhergehenden Ansprüche, **dadurch gekennzeichnet, dass** der Abstand des weiteren Werkzeugs (51) von der Ebene der Sägeblätter (31, 33) verändert wird.

6. Verfahren nach einem der vorhergehenden Ansprüche, **dadurch gekennzeichnet, dass** das weitere Werkzeug (51) um mindestens eine Achse (48) schwenkbar gelagert ist.

7. Verfahren nach einem der vorhergehenden Ansprüche, **dadurch gekennzeichnet, dass** die Bearbeitungseinheit (15) durch Verschiebung in Y-Richtung außer Eingriff mit der zu bearbeitenden Platte (9) gebracht wird.

8. Verfahren nach einem der vorhergehenden Ansprüche, **dadurch gekennzeichnet, dass** nur eine einzige Bearbeitungseinheit (15) vorgesehen ist.

9. Verfahren nach einem der vorhergehenden Ansprüche, **dadurch gekennzeichnet, dass** das weitere Werkzeug (51) ausgewählt ist aus: Fräser, Stichsäge, Sägedrahtsäge, Laser, Wasserstrahleinheit.

10. Verfahren nach einem der Ansprüche 1 bis 9, **dadurch gekennzeichnet, dass** über das weitere Werkzeug (51) längs der Platte (9) in x- und/oder y-Richtung ein Gehrungsschnitt ausgebildet wird.

11. Verfahren nach Anspruch 10, **dadurch gekennzeichnet, dass** zur Ausbildung des Gehrungsschnitts ein zylindrisch geformter Fräser als weiteres Werkzeug (51) schwenkbar gelagert an der Bearbeitungseinheit (15) oder ein zumindest im Fräsbereich konisch geformter Fräser vorgesehen ist.

12. Plattenbearbeitungsvorrichtung (1), insbesondere zur Durchführung des Verfahrens nach einem der Ansprüche 1 bis 11, mit einem Tisch (5, 5') zur Lagerung einer zu bearbeitenden Platte (9), einer Vorschubeinrichtung zum Verschieben der Platte (9) in einer ersten Richtung (X-Richtung), und einer Bearbeitungseinheit (15), die zwei antreibbare Sägeblätter (Vorsägeblatt 31, Hauptsägeblatt 33) aufweist, wobei die Bearbeitungseinheit (15) zum Ausführen eines Sägevorgangs von einer Bearbeitungsseite der Platte (9) her in einer zweiten Richtung (Y-Richtung), die zur X-Richtung rechtwinklig verläuft, antreibbar gelagert ist,
wobei die Plattenbearbeitungsvorrichtung (1) mittels numerischer Steuerung betrieben wird und die Bearbeitungseinheit (15) ein weiteres Werkzeug (51) aufweist, das fähig ist, die Platte (9) in mehr als einer einzigen Richtung zu bearbeiten und die Platte (9) mittels einer kurvenförmig oder nicht nur in X-Richtung und nicht nur in Y-Richtung verlaufenden Schnittlinie (70) in zwei Teile zu zerlegen.

## Claims

1. Method for operating a panel working machine (1) comprising a table (5, 5') for supporting a panel (9) to be processed, a feed device for moving the panel (9) in a first direction (X direction), and a processing unit (15) comprising two drivable saw blades (pre-sawing blade 31, main saw blade 33), wherein the processing unit (15) is mounted to be driven in a second direction (Y direction) that extends at a right angle to the X direction for carrying out a sawing operation from a processing side of the panel (9), wherein
the processing unit (15) comprises a further tool (51) that is able to additionally process the panel (9), **characterized in that** the processing unit (15) is positioned in the y direction below the panel (9), the panel (9) is moved in the x direction while the processing unit (15) is stationary or while the further tool (51) is simultaneously moved in the y direction, whereby the panel (9) is cut through or incised in the x direction at at least one location by the further tool (51), and the panel (9) is cut through a second time in the y direction by the saw blades (31, 33) in a second processing step.

2. Method according to claim 1, **characterized in that** at least the saw blades (31, 33) are removed from the plane of the processing side and are thereby moved into a position that prevents contact between the panel (9) to be processed and the saw blades when the processing unit (15) is moved in the Y direction.

3. Method according to any one of the preceding claims, **characterized in that** the further tool (51) is removed from the plane of the processing side in order to prevent contact with the panel (9).

4. Method according to claim 3, **characterized in that** the further tool (51) is disposed to be movable with respect to other parts of the processing unit (15).

5. Method according to any one of the preceding claims, **characterized in that** the distance between the further tool (51) and the plane of the saw blades (31, 33) is changed.

6. Method according to any one of the preceding claims, **characterized in that** the further tool (51) is pivotably mounted about at least one axis (48).

7. Method according to any one of the preceding claims, **characterized in that** the processing unit (15) is disengaged from the panel (9) to be processed by moving the processing unit (15) in the Y direction.

8. Method according to any one of the preceding claims, **characterized in that** only one single processing unit (15) is provided.

9. Method according to any one of the preceding claims, **characterized in that** the additional tool (51) is selected from: milling cutter, pad saw, wire saw, laser, water jet unit.

10. Method according to any one of the claims 1 through 9, **characterized in that** the further tool (51) forms a bevel cut along the panel (9) in the x and/or y direction.

11. Method according to claim 10, **characterized in that** for forming the bevel cut, a cylindrically formed milling cutter is pivotably mounted on the processing unit (15) as an additional tool (51), or a milling cutter is provided that is conically shaped at least in the milling region.

12. Panel processing device (1), in particular for carrying out the method according to any one of the claims 1 through 11, comprising a table (5, 5') for supporting a panel (9) to be processed, a feed device for moving the panel (9) in a first direction (X direction), and a processing unit (15) that comprises two drivable saw blades (pre-sawing blade 31, main saw blade 33), wherein the processing unit (15) is mounted to be driven in a second direction (Y direction) that extends at a right angle to the X direction for carrying out a sawing operation from a processing side of the panel (9), wherein the panel processing device (1) is operated through numerical control and the processing unit (15) comprises a further tool (51) that is able to process the panel (9) in more than one direction and to separate the panel (9) into two parts via a cutting line (70) that extends curvilinearly or does not exclusively extend in the X direction or Y direction.

## Revendications

1. Procédé d'actionnement d'un dispositif (1) d'usinage de panneaux comprenant un plateau (5, 5') permettant de déposer un panneau (9) à usiner ; un système d'avance conçu pour déplacer ledit panneau (9) dans une première direction (direction des X) ; et une unité d'usinage (15) munie de deux lames de scie entraînables (lame de sciage préalable 31, lame de sciage principale 33), sachant que, pour exécuter une opération de sciage, l'unité d'usinage (15) est montée avec faculté d'entraînement depuis un côté usinage du panneau (9), dans une seconde direction (direction des Y) s'étendant perpendiculairement à la direction des X,
l'unité d'usinage (15) comportant un outil supplémentaire (51) apte à l'usinage additionnel du panneau (9),
**caractérisé par le fait que** l'unité d'usinage (15) est positionnée au-dessous du panneau (9) dans la direction des Y, ledit panneau (9) est déplacé dans la direction des X lorsque ladite unité d'usinage (15) est statique, ou dans la direction des Y lorsque l'outil supplémentaire (51) est animé d'un mouvement simultané, et ledit outil supplémentaire (51) provoque alors un sectionnement intégral ou une entaille dudit panneau (9) dans la direction des X, en au moins un emplacement ; et **par le fait que**, durant une seconde étape d'usinage, un second sectionnement intégral dudit panneau (9) est provoqué par les lames de scie (31, 33) dans la direction des Y.

2. Procédé selon la revendication 1, **caractérisé par le fait qu'**au moins les lames de scie (31, 33) sont amenées, par éloignement vis-à-vis du plan du côté usinage, à une position dans laquelle une venue en contact desdites lames de scie, avec le panneau (9) à usiner, est exclue lors d'un mouvement de l'unité d'usinage (15) dans la direction des Y.

3. Procédé selon l'une des revendications précédentes, **caractérisé par le fait que** l'outil supplémentaire (51) est éloigné du plan du côté usinage, en vue d'empêcher une venue en contact avec le panneau (9).

4. Procédé selon la revendication 3, **caractérisé par le fait que** l'outil supplémentaire (51) est monté coulissant par rapport à d'autres parties de l'unité d'usinage (15).

5. Procédé selon l'une des revendications précédentes, **caractérisé par** une modification de l'espacement de l'outil supplémentaire (51) vis-à-vis du plan des lames de scie (31, 33).

6. Procédé selon l'une des revendications précédentes, **caractérisé par le fait que** l'outil supplémentaire (51) est monté à pivotement autour d'au moins un axe (48).

7. Procédé selon l'une des revendications précédentes, **caractérisé par le fait que** la prise de l'unité d'usinage (15), avec le panneau (9) à usiner, est supprimée par déplacement dans la direction des Y.

8. Procédé selon l'une des revendications précédentes, **caractérisé par** la présence d'une seule et unique unité d'usinage (15).

9. Procédé selon l'une des revendications précédentes, **caractérisé par le fait que** l'outil supplémentaire (51) est sélectionné au sein de l'éventail suivant : fraiseuse, scie sauteuse, scie à fil métallique, laser, unité à jets d'eau.

10. Procédé selon l'une des revendications 1 à 9, **caractérisé par le fait qu'**une coupe d'onglet est exécutée par l'outil supplémentaire (51) le long du panneau (9), dans la direction des X et/ou des Y.

11. Procédé selon la revendication 10, **caractérisé par le fait que**, en vue d'exécuter la coupe d'onglet, une fraiseuse de forme cylindrique est montée à pivotement sur l'unité d'usinage (15), en tant qu'outil supplémentaire (51) ; ou il est prévu une fraiseuse présentant une forme conique au moins dans la zone de fraisage.

12. Dispositif (1) d'usinage de panneaux, notamment pour la mise en oeuvre du procédé selon l'une des revendications 1 à 11, comprenant un plateau (5, 5') permettant de déposer un panneau (9) à usiner ; un système d'avance conçu pour déplacer ledit panneau (9) dans une première direction (direction des X) ; et une unité d'usinage (15) munie de deux lames de scie entraînables (lame de sciage préalable 31, lame de sciage principale 33), sachant que, pour exécuter une opération de sciage, l'unité d'usinage (15) est montée avec faculté d'entraînement depuis un côté usinage du panneau (9), dans une seconde direction (direction des Y) s'étendant perpendiculairement à la direction des X, ledit dispositif (1) d'usinage de panneaux étant actionné au moyen d'une commande numérique ; et
l'unité d'usinage (15) présentant un outil supplémentaire (51) apte à usiner le panneau (9) dans plus d'une unique direction, et à scinder ledit panneau (9) en deux parties au moyen d'une ligne de sectionnement (70) s'étendant en courbe, ou non uniquement dans la direction des X et non uniquement dans la direction des Y.
